Europäisches Patentamt

European Patent Office

Office européen des brevets

(11) Veröffentlichungsnummer : **0 095 019**
**B1**

(12) **EUROPÄISCHE PATENTSCHRIFT**

(45) Veröffentlichungstag der Patentschrift :
**10.09.86**

(51) Int. Cl.⁴ : **F 16 D 65/50, F 16 D 67/06**

(21) Anmeldenummer : **83102293.4**

(22) Anmeldetag : **09.03.83**

(54) **Elektromagnetisch betätigte Brems-Kupplungs-Vorrichtung.**

(30) Priorität : **21.05.82 DE 8214887 U**

(43) Veröffentlichungstag der Anmeldung :
**30.11.83 Patentblatt 83/48**

(45) Bekanntmachung des Hinweises auf die Patenterteilung : **10.09.86 Patentblatt 86/37**

(84) Benannte Vertragsstaaten :
**AT CH DE FR GB IT LI NL SE**

(56) Entgegenhaltungen :
**DE-A- 2 747 466**
**DE-C-   387 925**
**GB-A-   928 520**

(73) Patentinhaber : **Lenze GmbH & Co KG Extertal**
**Breslauer Strasse 3**
**D-4923 Extertal-Bösingfeld (DE)**

(72) Erfinder : **Sieker, Günther, Dipl.-Ing.**
**Entruper Weg 234 A**
**D-4920 Lemgo 1 (DE)**
Erfinder : **Knop, Rolf**
**Fohlenweide 10**
**D-4924 Barntrup (DE)**

(74) Vertreter : **Elbertzhagen, Otto et al**
**Patentanwälte Thielking & Elbertzhagen Gadderbau-**
**mer Strasse 20**
**D-4800 Bielefeld 1 (DE)**

## Beschreibung

Die Erfindung bezieht sich auf eine elektromagnetisch betätigte Brems-Kupplungs-Vorrichtung mit einem feststehenden Gehäuse, in dem rotationssymmetrisch ausgebildet ein Bremsmagnetteil und ein Kupplungsmagnetteil einander in Axialrichtung gegenüberliegen und dazwischen koaxial ein axial verschiebliches Ankerteil sowie ein Kupplungsrotor angeordnet sind, wobei zwischen dem Ankerteil und dem Kupplungsrotor oder dem feststehenden Bremsmagnetteil ein Luftspalt besteht, der durch Axialverschiebung des Bremsmagnetteils veränderbar ist, wozu zwischen der dem Ankerteil abgelegenen Stirnseite des Bremsmagnetteils und dem Gehäuse nachstellbare Stützelemente angeordnet sind, die bei Verstellung eine axiale Verschiebung des Bremsmagnetteils bewirken.

Bei schaltbaren Kupplungs-Brems-Kombinationen der vorgenannten Art, die aufgrund von Friktion funktionieren, muß man den an den Reibflächen auftretenden Verschleiß permanent oder diskontinuierlich ausgleichen, indem die betreffenden Bauteile um den Verschleißbetrag zueinander in Axialrichtung verschoben werden, bis der vorgegebene Arbeitsluftspalt der Friktionsteile wieder eingestellt ist. Eine solche Nachstellung ist insbesondere bei elektromagnetisch arbeitenden Kupplungs-Brems-Kombinationen erforderlich, weil hier der Betrieb nur über relativ geringe Arbeitsluftspalte möglich ist.

Es sind Nachstelleinrichtungen bei solchen Kupplungs-Brems-Kombinationen bekannt, bei denen zur Nachstellung des Arbeitsluftspaltes die gesamte Vorrichtung zu demontieren ist. Dabei stützen sich die kraftübertragenden Kupplungsteile an Gehäusehälften ab, die beide in ihrem Abstand zueinander verändert werden können. Meist wird der Abstand der Gehäusehälften durch Entfernen einzelner Bleche von beigelegten Blechpaketen verringert. Dabei besteht der Nachteil, daß alle relativ zueinander beweglichen Kupplungsteile, insbesondere auch die An- und Abtriebswellen zueinander in ihrer Lage verändert werden müssen.

Bei einer anderen bekannten Nachstelleinrichtung für eine Kupplungs-Brems-Vorrichtung der eingangs genannten Art (DE-A-27 47 466) werden keilförmige Stützelemente hinter dem Bremsmagnetteil radial um den Verschleißweg eingeschoben. Damit sind mehrere Nachteile verbunden :

a) Ein ungleichmäßiges Eintreiben der Stützelemente kann das Bremsmagnetteil schief stellen. Das wirkt sich negativ auf die Bremsmomente, Kupplungsmomente, Schaltzeiten, den Verschleiß usw. aus.

b) Um überhaupt das Verschieben des Bremsmagnetteils zu ermöglichen, muß es federnd aufgehängt sein. Infolgedessen können die Funktionskräfte Schwingungen verursachen, wodurch Geräusche auftreten können.

c) Bei einer Kupplungs-Brems-Vorrichtung muß das Federelement hinter dem Bremsmagnetteil so bemessen sein, daß das erzeugte Bremsmoment aufgefangen werden kann. Dabei begrenzt die erforderliche Federsteifigkeit den Verschiebeweg des Bremsmagnetteils, wodurch schon dann ein Nachstellen des Arbeitsluftspaltes nicht mehr möglich sein kann, wenn immer noch genügend Verschleißvolumen an den Friktionselementen vorhanden ist.

Es sind auch schon Kupplungs-Brems-Vorrichtungen der gattungsgemäßen Art bekannt, die ein geschlossenes Gehäuse besitzen. Dabei geschieht die Einstellung des Arbeitsluftspaltes automatisch durch ein um den Verschleißweg nachrückendes Stützteil. Eine solche Nachstelleinrichtung ist äußerst kompliziert und damit sehr störanfällig.

Ferner beschreibt die AU-B-46 749/79 eine Sicherheitsbremse, bei der mittels zweier axial verschiebliche Ringe eine Bremskraft aufgebracht wird, indem im Betriebsfall eine Axialverschiebung gegeneinander reibende Bremsteile bewirkt wird. Eine Justage der Bremsteile kann dort über die axial verschieblichen Ringe nicht erfolgen.

Der Erfindung liegt daher die Aufgabe zugrunde, eine Brems-Kupplungs-Vorrichtung der eingangs genannten Art zu schaffen, die unabhängig von der Bauart des Vorrichtungsgehäuses eine exakte Axialverstellung des Brems-Magnetteils und damit des Arbeitsluftspaltes ermöglicht.

Diese Aufgabe wird bei einer Brems-Kupplungs-Vorrichtung der gattungsgemäßen Art nach der Erfindung dadurch gelöst, daß die Stützelemente zumindest zwei gegeneinander verdrehbare, koaxial zum Bremsmagnetteil angeordnete Nachstellringe mit sich aufeinander abstützenden Axialkurven sind, deren einer verdrehsicher mit dem Gehäuse verbunden und deren anderer koaxial zum Bremsmagnetteil verdrehbar ist sowie ein Verstellglied aufweist, das in einem Schlitz im Gehäuse verschieblich ist.

Der besondere Vorteil der erfindungsgemäßen Brems-Kupplungs-Vorrichtung liegt darin, daß der Bremsmagnetteil durch die Nachstellringe mit den Axialkurven zwangsgeführt ist, wodurch ein Schiefsitzen des Bremsmagnetteils nicht möglich ist. Insoweit ist eine erhöhte Funktionssicherheit gegeben. Die Steigung der Axialkurven der Nachstellringe wird so bemessen, daß das volle Verschleißvolumen ausgenutzt werden kann. Insbesondere entspricht der Hub, um den die Nachstellringe über ihre Axialkurven gegeneinander in Axialrichtung verschoben werden können, der Verschleißhöhe der üblicherweise verwendeten Reibbeläge.

Die Kupplungs-Brems-Vorrichtung kann ein geschlossenes Gehäuse besitzen, das für die Nachstellung des Arbeitsluftspaltes nicht geöffnet zu werden braucht. Dazu ist der eine der Nachstellringe verdrehsicher mit dem Gehäuse verbunden und der andere Nachstellring koaxial zum Brems-.magnetteil verdrehbar, und letzterer besitzt ein Verstellglied, das in einem Schlitz im Gehäuse verschieblich ist. Das Verstellglied für den drehbaren Nachstellring ist von außen bedienbar und zeigt zugleich aufgrund seiner Stellung im Schlitz des Gehäuses eine noch vorhandene Nachstellmöglichkeit an. Zweckmäßig ist das Verstellglied als durch den Schlitz des Gehäuses nach außen hindurchtretender Zapfen ausgebildet, der längs einer Skala am Rande des Schlitzes des Gehäuses verschieblich ist. Dabei macht man zweckmäßig den Abstand der Teilstriche der Skala voneinander gerade so groß, wie es dem Nennluftspalt der Vorrichtung entspricht. Im Bedarfsfalle verstellt man dann über das Verstellglied das Bremsmagnetteil solange, bis das Ankerteil zwischen dem Bremsmagnetteil und dem Kupplungsrotor eingeklemmt ist. Danach lockert man die Zustellung des Bremsmagnetteils um einen Teilstrich der Skala und hat so ohne weiter erforderliche Manipulationen den Nennluftspalt einjustiert. Es erübrigt sich dadurch sogar eine Kontrollöffnung zur Messung des Luftspaltes zwischen den Reibflächen.

Die Sicherung des Bremsmagnetteils gegen unbeabsichtigte Axialverschiebungen erfolgt zweckmäßig über achsparallel angeordnete Schrauben, über die das Bremsmagnetteil gegen die seiner rückwärtigen Stirnseite benachbart liegende Stirnwand des Gehäuses verspannt werden kann. Dabei werden die beiden Nachstellringe, durch die die Befestigungsschrauben für das Bremsmagnetteil hindurchtreten, verklemmt, da sich über sie das Bremsmagnetteil an der Gehäusewand abstützt. Für die Justage des Arbeitsluftspaltes sind die Befestigungsschrauben des Bremsmagnetteils leicht zu lösen, denn zweckmäßig treten die Schrauben durch die Gehäusewand hindurch und sind von außen erreichbar.

Dies ermöglicht eine vollkommen geschlossene Ausführung des Gehäuses, wodurch insbesondere die Schaltelemente in der Kupplungs-Brems-Vorrichtung gegen Umwelteinflüsse geschützt sind. Das axialverschiebbare Bremsmagnetteil liegt mit seiner rückwärtigen Stirnseite, seinem Boden, immer fest auf den Nachstellringen und damit auf der rückwärtigen Gehäusewand auf, wodurch insbesondere ein Vibrieren des Bremsmagnetteils und damit verbundene Geräusche vermieden sind.

Weitere vorteilhafte Ausgestaltungsmerkmale der erfindungsgemäßen Brems-Kupplungs-Vorrichtung ergeben sich aus den Unteransprüchen und aus der nachstehenden Beschreibung.

Die Erfindung wird nachfolgend anhand der Zeichnung an einem Ausführungsbeispiel noch näher erläutert. Dabei zeigen :

Figur 1 einen Diametralschnitt durch eine elektromagnetisch betätigbare Brems-Kupplungs-Vorrichtung und

Figur 2 eine · Teilansicht der Brems-Kupplungs-Vorrichtung nach Fig. 1 in Richtung des Pfeiles A.

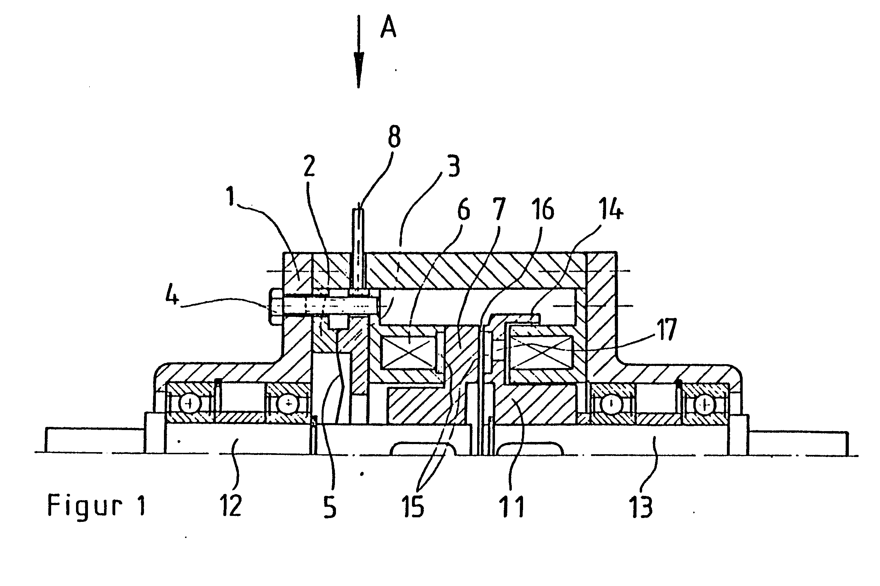

Die in Fig. 1 dargestellte Kupplungs-Brems-Vorrichtung umfaßt ein feststehendes Gehäuse 1, in dem zwei Wellenenden 12 und 13 in axial fluchtender Richtung zueinander gelagert sind. Über den Wellenenden 12 und 13 innerhalb des Gehäuses 1 erstrecken sich ein Bremsmagnetteil 6 und ein Kupplungsmagnetteil 14, die beide rotationssymmetrisch ausgebildet sind. Zwischen dem Bremsmagnetteil 6 und dem Kupplungsmagnetteil 14 ist ein Ankerteil 7 und ein Kupplungsrotor 11 angeordnet, die im Bereich zwischen den Magnetteilen 6 und 14 scheibenförmig ausgebildet sind, wobei sich durch den scheibenförmigen Teil jeweils der magnetische Kreis des Bremsmagnetteils 6 oder des Kupplungsmagnetteils 14 schließt. Der Ankerteil 7 und der Kupplungsrotor 11 bestehen deshalb aus ferromagnetischem Material, wobei zur Vermeidung eines magnetischen Kurzschlusses in den Kupplungsrotor 11 ein Fenster 17 eingearbeitet ist. Der Kupplungsrotor 11 ist verdrehsicher mit dem Wellenende 13 verbunden, während das Ankerteil 7 verdrehsicher auf dem Wellenende 12, jedoch in Axialrichtung verschieblich angeordnet ist. Je nach Funktion entweder als Kupplung oder als Bremse erfolgt der Kraftschluß aufgrund der Magnetkräfte von dem verschieblichen Ankerteil 7 entweder zum feststehenden Bremsmagnetteil 6 oder zum Kupplungsrotor 11 hin. Deshalb besitzen das Bremsmagnetteil 6 an seiner dem Ankerteil 7 benachbarten Stirnseite und der Kupplungsrotor 11 in seinem scheibenförmigen Bereich in Höhe des scheibenförmigen Bereichs des Ankerteils 7 ringförmige Reibbeläge 15. Je nach Axialstellung des Ankerteils 7 besteht entweder zum Kupplungsrotor 11 oder zum Bremsmagnetteil 6 hin ein Luftspalt 16, der sich mit dem Verschleiß der Reibbeläge 15 und gegebenenfalls des Ankerteils 7 ständig· vergrößert und daher im Hinblick auf einen minimalen Schaltweg des Ankerteils 7 entweder zum feststehenden Magnetteil 6 oder zum Kupplungsrotor 11 hin nachgestellt werden muß.

Dazu ist das Bremsmagnetteil 6 in Axialrichtung innerhalb des geschlossenen Gehäuses 1 verschiebbar. Es stützt sich dazu mit seiner rückwärtigen, dem Ankerteil 7 abgelegenen Stirnseite über Nachstellringe 2 und 3 an einer rückwärtigen Stirnwand des Gehäuses 1 ab. Am Bremsmagnetteil 6 und der Wandung des Gehäuses 1 liegen die Nachstellringe 2 und 3, welche ebenfalls koaxial zur Gesamtvorrichtung angeordnet sind, plan an. An ihren einander zugewandten Stirnseiten besitzen die Nachstellringe 2 und 3 Axialkurven 5, über die sie sich in Axialrichtung aufeinander abstützen. Die Axialkurven 5 besitzen Abschnitte mit gewindeähnlicher Steigung, so daß ein Verdrehen der beiden Nachstellringe 2 und 3 gegeneinander um die gemeinsame Achse eine Abstandsänderung deren äußerer Stirnseiten bewirkt. Somit kann auch der Abstand des Bremsmagnetteils 6 von der rückwärtigen Wandung des Gehäuses 1 verändert werden, und der mit den Nachstellringen 2 und 3 einstellbare maximale Hub des Bremsmagnetteils 6 in Axialrichtung ist gerade so bemessen, daß er etwa der jeweiligen Verschleißhöhe der Reibbeläge 15 am Bremsmagnetteil 6 bzw. am Kupplungsrotor 11 entspricht.

Die Nachstellringe 2 und 3 können beispielsweise durch im Gehäuse 1 angeordnete Druckfedern selbsttätig gegen ein unbeabsichtigtes Verdrehen gesichert sein. Beim Ausführungsbeispiel dienen dazu Befestigungsschrauben 4, die in achsparalleler Richtung die rückwärtige Wandung des Gehäuses 1 mit dem Bremsmagnetteil 6 verbinden. Über diese Befestigungsschrauben 4 läßt sich damit das Bremsmagnetteil 6 über die Nachstellringe 2 und 3 gegen die rückwärtige Wandung des Gehäuses 1 verspannen. Dadurch werden die Nachstellringe 2 und 3 verklemmt.

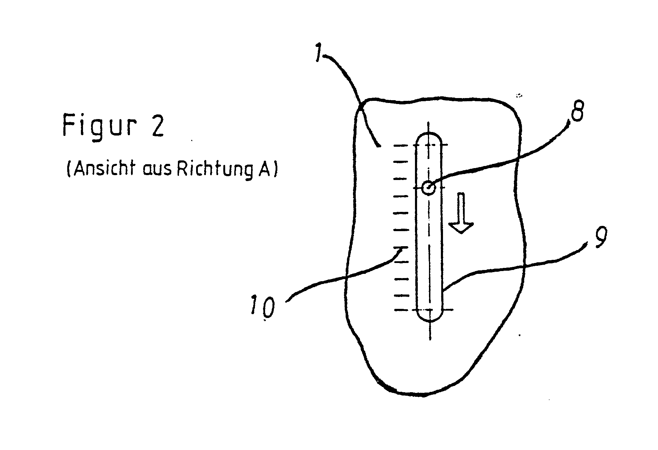

Der außen an der Gehäusewand liegende Nachstellring 2 ist feststehend angeordnet, während der innere Nachstellring 3 verdrehbar ist. Die Verdrehung erfolgt von außen über ein als Zapfen 8 ausgebildetes Verstellglied, das durch den Mantel des Gehäuses 1 hindurchtritt und über diesen nach außen vorsteht. Wie Fig. 2 veranschaulicht, ist der Zapfen 8 in einem Schlitz 9 des Gehäuses 1 verschieblich, dieser Schlitz 9 verläuft in Umfangsrichtung des Gehäusemantels. Denn zweckmäßig ist auch das Gehäuse 1 in seinen wesentlichen Elementen rotationssymmetrisch ausgebildet.

Um Verschmutzungen des Inneren des Gehäuses 1 vorzubeugen, kann der Zapfen 8 aus dem inneren Nachstellring 3 herausgenommen werden. Bei entsprechender Länge kann der Zapfen 8 in den Schlitz 9 etwa in Umfangsrichtung des Gehäuses 1 verlaufend eingelegt werden. Der Schlitz 9 ist durch einen geeigneten Deckel verschließbar.

Da die Befestigungsschrauben 4 und das Verstellglied 8 außerhalb des Gehäuses 1 zugänglich sind, kann das Gehäuse 1 geschlossen ausgebildet sein. Zur Nachjustierung des Arbeitsluftspaltes 16 sind lediglich die Befestigungsschrauben 4 zu lösen, und es muß das Verstellglied 8 unter Mitnahme des inneren Nachstellringes 3 entsprechend im Schlitz 9 verschoben werden.

Damit man einerseits die noch vorhandene Nachstellmöglichkeit nachprüfen und andererseits den genauen Nennluftspalt einjustieren kann, ist, wie Fig. 2 weiter zeigt, längs des Schlitzes 9 außen am Gehäuse 1 eine Skala 10 angebracht, wobei eine Verstellung des Zapfens 8 zwischen zwei benachbarten Teilstrichen in der Skala 10 gerade einer Axialverschiebung des Bremsmagnetteils 6 um das Maß des Nennluftspaltes entspricht. Man kann daher einfach den Zapfen 8 nach Lösen der Befestigungsschrauben 4 solange in Richtung des Pfeiles (Fig. 2) verschieben, bis ein Widerstand merklich wird, bis also das Ankerteil 7 zwischen dem Magnetteil 6 und dem Kupplungsrotor 11 gerade eingeklemmt ist, um danach den Zapfen 8 um einen Teilstrich zurückzunehmen. Man hat dann exakt den Nennluftspalt eingestellt. Es ist auf diese Weise sogar möglich, den Luftspalt kleiner als den Nennluftspalt einzujustieren, wenn man beispielsweise den Zapfen 8 um weniger als einen Teilstrich der Skala 10 zurückschiebt. Durch Drehen der Abtriebswelle von Hand kann man sich davon überzeugen, wie weit gerade der Nachstellring 3 zurückgedreht werden muß, bis das Ankerteil 7 gerade nicht mehr zwischen dem Bremsmagnetteil 6 und dem Kupplungsrotor 11 schleift. Damit hat man die Möglichkeit einer Minimierung des Arbeitsluftspaltes. Das vermindert insbesondere die Schaltgeräusche, da das Ankerteil 7 nur noch über den sehr klein eingestellten Luftspalt hinweg beschleunigt wird und mit geringer kinetischer Energie auf den Kupplungsrotor 11 bzw. auf das Bremsmagnetteil 6 aufschlägt.

Eine solche Luftspaltkorrektur erfordert einen sehr geringen Aufwand, denn der Einsatz von Spezialwerkzeugen ist nicht erforderlich, ebenso wenig eine Demontage oder Neujustage montierter Elemente oder mit der Vorrichtung zusammengebauter Teile. Auch ist eine hohe Genauigkeit der planparallelen Verschiebung der dem Ankerteil 7 zugewandten Stirnseite des Bremsmagnetteils 6 gewährleistet, womit auch Luftspalte eingestellt werden können, die in der Größenordnung von 1/10 mm liegen.

**Patentansprüche**

1. Elektromagnetisch betätigte Brems-Kupplungs-Vorrichtung mit einem feststehenden Gehäuse (1), in dem rotationssymmetrisch ausgebildet ein Bremsmagnetteil (6) und ein Kupplungsmagnetteil (14) einander in Axialrichtung gegenüberliegen und dazwischen koaxial ein axialverschiebliches Ankerteil (7) sowie ein Kupplungsrotor (11) angeordnet sind, wobei zwischen dem Ankerteil (7) und dem Kupplungsrotor (11) oder dem feststehenden Bremsmagnetteil (6) ein Luftspalt besteht, der durch Axialverschiebung des Bremsmagnetteils (6) veränderbar ist, wozu zwischen der dem Ankerteil (7) abgelegenen Stirnseite des Bremsmagnetteils (6) und dem Gehäuse (1) nachstellbare Stützelemente (2, 3) angeordnet sind, die bei Verstellung eine axiale Verschiebung des Bremsmagnetteils (6) bewirken, dadurch gekennzeichnet, daß die Stützelemente (2, 3) zumindest zwei gegeneinander verdrehbare, koaxial zum Bremsmagnetteil (6) angeordnete Nachstellringe mit sich aufeinander abstützenden Axialkurven (5) sind, deren einer (2) verdrehsicher mit dem Gehäuse (1) verbunden und deren anderer (3) koaxial zum Bremsmagnetteil (6) verdrehbar ist sowie ein Verstellglied (8) aufweist, das in einem Schlitz (9) im Gehäuse (1) verschieblich ist.

2. Vorrichtung nach Anspruch 1, dadurch gekennzeichnet, daß das Verstellglied (8) des einen Nachstellringes (3) durch den Schlitz (9) hindurch nach außen aus dem Gehäuse (1) herausragt.

3. Vorrichtung nach Anspruch 2, dadurch gekennzeichnet, daß das Verstellglied (8) demontierbar und der Schlitz (9) im Gehäuse (1) verschließbar ist.

4. Vorrichtung nach einem der Ansprüche 1 bis 3, dadurch gekennzeichnet, daß das Bremsmagnetteil (6) über achsparallele Schrauben (4), welche durch die Nachstellringe (2, 3) hindurchtreten, mit dem Gehäuse (1) verspannbar ist.

## Claims

1. Electromagnetically actuated brake coupling device with a fixed housing (1), in which, of rotationally symmetrical design, a brake-magnet part (6) and a coupling-magnet part (14) are located opposite one another in the axial direction and an axially displaceable armature part (7) and a coupling rotor (11) are arranged coaxially between them, there being between the armature part (7) and the coupling rotor (11) or the fixed brake-magnet part (6) an air gap which is variable as a result of axial displacement of the brake-magnet part (6), for which purpose there are arranged between the end face of the brake-magnet part (6) distant from the armature part (7) and the housing (1) adjustable supporting elements (2, 3) which, when adjusted, cause axial displacement of the brake-magnet part (6), characterised in that the supporting elements (2, 3) are at least two adjusting rings rotatable relative to one another, which are arranged coaxially relative to the brake-magnet part (6) and have axial cams (5) supported on one another, and of which one (2) is connected fixedly in terms of rotation to the housing (1) and the other (3) is rotatable coaxially relative to the brake-magnet part (6) and has an adjusting member (8) displaceable in a slot (9) in the housing (1).

2. Device according to Claim 1, characterised in that the adjusting member (8) of the other adjusting ring (3) projects outwards from the housing (1) through the slot (9).

3. Device according to Claim 2, characterised in that the adjusting member (8) is removable, and the slot (9) in the housing (1) can be closed.

4. Device according to one of Claims 1 to 3, characterised in that the brake-magnet part (6) can be braced relative to the housing (1) by means of axis-parallel screws (4) which pass through the adjusting rings (2, 3).

## Revendications

1. Dispositif d'embrayage-freinage actionné électromagnétiquement, comportant un carter fixe (1) dans lequel sont placées dans des positions mutuellement opposées dans une direction axiale et avec symétrie de révolution une partie magnétique de freinage (6) et une partie magnétique d'embrayage (14) et, entre elles et coaxialement, une partie-armature (7) mobile axialement ainsi qu'un rotor d'embrayage (11), tandis qu'il est prévu entre la partie-armature (7) et le rotor d'embrayage (11) ou bien la partie magnétique de freinage (6) fixe un intervalle d'air qui est modifiable par translation axiale de la partie magnétique de freinage (6), et il est prévu entre le côté frontal, opposé à la partie-armature (7), de la partie magnétique de freinage (6) et le carter (1) des éléments d'appui (2, 3) réglables qui produisent, lors de leur manœuvre, une translation axiale de la partie magnétique de freinage (6), caractérisé en ce que les éléments d'appui (2, 3) sont constitués par au moins deux anneaux de réglage compensateur pouvant tourner l'un par rapport à l'autre, disposés coaxialement par rapport à la partie magnétique de freinage (6) et pourvus de cames axiales (5) s'appuyant l'une contre l'autre et dont l'une (2) est reliée de façon non tournante au carter (1) tandis que l'autre (3) peut tourner coaxialement par rapport à la partie magnétique de freinage (6) et comporte un organe de manœuvre (8) qui est déplaçable dans une fente (9) du carter (1).

2. Dispositif selon la revendication 1, caractérisé en ce que l'organe de manœuvre (8) d'un des anneaux du réglage compensateur (3) dépasse à l'extérieur du carter (1) au travers de la fente (9).

3. Dispositif selon la revendication 2, caractérisé en ce que l'organe de manœuvre (8) est démontable et la fente (9) du carter (1) peut être fermée.

4. Dispositif selon une des revendications 1 à 3, caractérisé en ce que la partie magnétique de freinage (6) peut être bloquée avec le carter (1) par l'intermédiaire de vis (4) parallèles à l'axe et qui traversent les anneaux de réglage compensateur (2, 3).

Figur 1

Figur 2

(Ansicht aus Richtung A)